# EUROPEAN PATENT APPLICATION

(11) **EP 4 851 709 A1**
(43) Date of publication of application: **09.12.2026**
(21) Application number: 25748463.4
(22) Date of filing: 14.01.2025
(51) Int. Cl.: G02F 1/361

(54) **METHOD FOR MANUFACTURING NON-LINEAR OPTICAL LAMINATE**

(30) Priority: 31.01.2024 JP 2024012656
(71) Applicant: National Institute of Information and Communications Technology, Koganei-shi, Tokyo 184-8795 (JP)
(72) Inventor: KAJI, Takahiro, Koganei-shi, Tokyo 184-8795 (JP); YAMADA, Toshiki, Koganei-shi, Tokyo 184-8795 (JP); OTOMO, Akira, Koganei-shi, Tokyo 184-8795 (JP)
(74) Representative: De Clercq & Partners
(86) International application number: PCT/JP2025/000852
(87) International publication number: WO 2025/164282

(57) **Abstract**

The present invention provides a method of manufacturing a nonlinear optical laminate comprising a target substrate and an electro-optic polymer layer positioned on the target substrate, the method comprising, in this order: a first step of preparing a first laminate that is made of a support substrate, a light absorption layer, a first electrode, an electro-optic polymer layer, and a second electrode laminated in this order; a second step of performing a poling process on the electro-optic polymer layer of the first laminate; a third step of removing the second electrode from the first laminate to obtain a second laminate; a fourth step of laminating the target substrate on a surface of the second laminate that was in contact with the second electrode to obtain a third laminate; a fifth step of performing laser peeling of the support substrate from the third laminate to remove the support substrate to obtain a fourth laminate; and a sixth step of removing the light absorption layer and the first electrode from the fourth laminate to obtain a nonlinear optical laminate.

## Description

### TECHNICAL FIELD

The present invention relates to a method of manufacturing a nonlinear optical laminate.

### BACKGROUND ART

Electro-optic polymers are nonlinear optical materials (electro-optic materials) that have large electro-optic coefficients as compared to inorganic nonlinear optical materials such as lithium niobate and zinc telluride and organic nonlinear optical materials such as DAST (4-N,N-dimethylamino-4'-N'-methyl-stilbazolium tosylate). An electro-optic polymer can realize high-efficiency optical phase modulation and optical modulation by an electro-optic effect because it can have a large figure of merit for an electro-optic effect, which is defined with consideration of an electro-optic coefficient and a refractive index, as compared to other materials (the figure of merit is represented by n³r, where n represents the refractive index of the nonlinear optical material (electro-optic material) and r represents the electro-optic coefficient) (NPL 3). Further, while a crystalline nonlinear optical material has a large absorption coefficient caused by crystal lattice vibration in a terahertz wave (electromagnetic wave with a frequency of 0.1 to 20 THz) band, an electro-optic polymer has a small absorption coefficient in a wide terahertz wave band. Therefore, an electro-optic polymer can be used for generating and detecting broadband terahertz waves. Further, an electro-optic polymer has a small difference in refractive index between an optical region and a terahertz wave band, a millimeter wave band, and a microwave band. Therefore, a nonlinear optical element (including an electro-optic element) including an electro-optic polymer can allow two or more types of electromagnetic waves included in electromagnetic waves of a wide range of frequencies including the optical region, the terahertz wave band, the millimeter wave band, and the microwave band to interact efficiently. Further, a nonlinear optical element (including an electro-optic element) including an electro-optic polymer can efficiently perform frequency conversion, phase modulation of electromagnetic waves, and the like. From these viewpoints, electro-optic polymers are attracting attention as a material that supports next-generation optical communication, wireless communication, electromagnetic wave sensing, and the like.

Types of electro-optic polymers include (1) a guest-host type electro-optic polymer in which a polymer serving as a matrix (which may also be referred to as a "matrix polymer" hereinafter) and a compound that exhibits a second-order nonlinear optical effect (which may also be referred to as an "electro-optic molecule" hereinafter) are mixed, (2) a side-chain type electro-optic polymer in which an electro-optic molecule is covalently bonded to a side chain of a polymer serving as a basic skeleton (which may also be referred to as a "base polymer" hereinafter), (3) a main-chain type electro-optic polymer in which an electro-optic molecule is covalently bonded in a main chain of a base polymer, (4) a cross-linked type electro-optic polymer having a crosslinkage between matrix polymers, or between base polymers, or between a matrix polymer or a base polymer and an electro-optic molecule or the like, (5) a molecular glass type electro-optic polymer, and the like. Electro-optic polymers are known as high-performance second-order nonlinear optical materials. Further, electro-optic polymers exhibit a second-order nonlinear optical effect.

The second-order nonlinear optical effect includes second harmonic generation, optical rectification, sum frequency generation, difference frequency generation, optical parametric oscillation/amplification, electro-optic effect (Pockels effect), and the like. By such a second-order nonlinear optical effect, frequency (wavelength) conversion of electromagnetic waves of various frequencies, control of a phase of electromagnetic waves by an electric field, and the like are achieved in a nonlinear optical element including an electro-optic polymer. As a specific example, terahertz waves can be generated by converting the frequency of laser light including two or more frequencies by the second-order nonlinear optical effect. Further, by converting the frequency of laser light including one or more frequencies and terahertz waves by the second-order nonlinear optical effect, the frequency of the laser light changes, and by detecting the laser light with the changed frequency, the terahertz waves can be detected. Further, terahertz waves and an electric field can be detected by using a change in refractive index due to the electro-optic effect. Further, phase modulation of electromagnetic waves can be performed by using a change in refractive index due to the electro-optic effect.

In order for an electro-optic polymer to exhibit a second-order nonlinear optical effect, it is necessary to align (orient) electro-optic molecules included in the electro-optic polymer in the same direction as much as possible. This process is called a poling process. As a method for performing the poling process, there is a method that involves preparing a structure that has poling electrodes positioned above and below an electro-optic polymer layer, heating it to near the glass transition temperature of the electro-optic polymer included in the electro-optic polymer layer, and applying a voltage between the electrodes. The electric field applied to the electro-optic polymer layer during the poling process is typically from 100 V/µm to 200 V/µm. Further, there is another method that involves performing a poling process by performing corona discharge on an electro-optic polymer layer laminated on a lower electrode. In the poling process, by heating the electro-optic polymer to near the glass transition temperature of the electro-optic polymer, the electro-optic polymer is softened and the electro-optic molecules in the electro-optic polymer become easy to move due to the electric field, and thereby the electro-optic molecules are easily oriented. Further, as the glass transition temperature of the electro-optic polymer increases, heat resistance of the resulting nonlinear optical element improves and orientation relaxation of the electro-optic molecules due to heat becomes less likely to occur, and thereby long-term thermal stability improves. The glass transition temperature of the electro-optic polymer is typically from 50°C to 200°C. The electro-optic polymer layer can be simply and easily formed by a spin coating method or the like. The electro-optic polymer layer can be processed into a waveguide by using a fine processing process such as photolithography and dry etching.

In a conventional method of manufacturing a nonlinear optical element including an electro-optic polymer, for example, a conductive cladding layer such as sol-gel glass is formed on a lower electrode, an electro-optic polymer layer (or an electro-optic polymer waveguide structure) is formed thereon, an upper electrode is formed thereon, and a voltage is applied between the lower electrode and the upper electrode to perform poling of the electro-optic polymer layer (NPL 1). In order to perform efficient poling of the electro-optic polymer layer, it is essential from the viewpoint of reducing a voltage drop in the cladding layer that a conductive cladding layer having higher conductivity than the electro-optic polymer layer exists between the lower electrode and the electro-optic polymer layer. However, by this method, since the resulting nonlinear optical element has a conductive cladding material with a large absorption loss of terahertz waves, the absorption loss of terahertz waves is large, and therefore it is difficult to manufacture a nonlinear optical element that utilizes high-efficiency terahertz waves. Further, there are constraints on the positioning of electrodes, such as the need for a lower electrode and the need to position the lower electrode at a distance and position such that poling can be properly performed. That is, it is difficult to manufacture a nonlinear optical element that includes a freely-selected material as a cladding layer such as a material with a small absorption loss of terahertz waves (for example, a cycloolefin polymer) or an insulating material, a nonlinear optical element without a lower electrode, and a nonlinear optical element in which a lower electrode or the like is positioned at a freely-selected distance and position. Accordingly, there has been proposed a method of manufacturing a nonlinear optical laminate, and a nonlinear optical element using the same, by transferring an electro-optic polymer that has been subjected to a poling process in advance onto a freely-selected target substrate (NPLs 2 and 4). By using this method, it is possible to manufacture a nonlinear optical element including a freely-selected material as a cladding layer such as a material with a small absorption loss of terahertz waves or an insulating material, a nonlinear optical element without a lower electrode, and a nonlinear optical element including an electro-optic polymer in which a lower electrode or the like is positioned at a freely-selected distance and position.

A nonlinear optical element including an electro-optic polymer can be manufactured by using a "nonlinear optical laminate." The "nonlinear optical laminate" means a laminate usable for manufacturing a nonlinear optical element. In a conventional method of manufacturing a nonlinear optical laminate, an electro-optic polymer layer that has been subjected to a poling process is tensile-peeled from an interface on a support substrate side having a poling electrode and transferred onto a target substrate (PTL 1, NPL 2).

### CITATION LIST

### PATENT LITERATURE

PTL 1: WO 2019/039530

### NON PATENT LITERATURE

NPL 1: Y Enami, et al., "Hybrid polymer/sol-gel waveguide modulators with exceptionally large electro-optic coefficients", Nat. Photonics 1, 180-185 (2007).
NPL 2: Takahiro Kaji, et al., "Terahertz-wave generation devices using electro-optic polymer slab waveguides and cyclo-olefin polymer clads", Optics Express Vol. 26, Issue 23, pp. 30466-30475 (2018).
NPL 3: "Organic Electro-Optics and Photonics" (L. R. Dalton, et al., Cambridge University Press (2015)).
NPL 4: Takahiro Kaji, et al., "D-band optical modulators using electro-optic polymer waveguides and non-coplanar patch antennas", Optics Express Vol. 31, Issue 11, pp. 17112-17121 (2023).

### SUMMARY OF INVENTION

### TECHNICAL PROBLEM

When the conventional method of manufacturing a nonlinear optical laminate is employed, in the case where a small-piece substrate, a large-area wafer substrate, or the like is used as a target substrate, at the time of transferring an electro-optic polymer layer by mechanical tensile peeling of the electro-optic polymer layer from a support substrate having a poling electrode, it can be difficult to uniformly peel the electro-optic polymer layer from the support substrate having a poling electrode. When the electro-optic polymer layer cannot be uniformly peeled from the support substrate having a poling electrode, the electro-optic polymer layer of the nonlinear optical laminate tends to have defect structures such as cracks, and from this viewpoint, it can be difficult to manufacture a nonlinear optical laminate with a good yield.

The present invention has been made in view of the above-mentioned circumstances, and an object of the present invention is to provide a method of manufacturing a nonlinear optical laminate that can manufacture a nonlinear optical laminate with a good yield.

### SOLUTION TO PROBLEM

A method of manufacturing a nonlinear optical laminate according to one aspect of the present disclosure is a method of manufacturing a nonlinear optical laminate comprising a target substrate and an electro-optic polymer layer positioned on the target substrate, the method comprising, in this order:
a first step of preparing a first laminate that is made of a support substrate, a light absorption layer, a first electrode, an electro-optic polymer layer, and a second electrode laminated in this order;
a second step of performing a poling process on the electro-optic polymer layer of the first laminate;
a third step of removing the second electrode from the first laminate to obtain a second laminate;
a fourth step of laminating the target substrate on a surface of the second laminate that was in contact with the second electrode to obtain a third laminate;
a fifth step of performing laser peeling of the support substrate from the third laminate to remove the support substrate to obtain a fourth laminate; and
a sixth step of removing the light absorption layer and the first electrode from the fourth laminate to obtain a nonlinear optical laminate.

### ADVANTAGEOUS EFFECTS OF INVENTION

According to the present invention, it is made possible to provide a method of manufacturing a nonlinear optical laminate that can manufacture a nonlinear optical laminate with a good yield.

### BRIEF DESCRIPTION OF DRAWINGS

[Fig. 1] Fig. 1 is a cross-sectional view of a first laminate for explaining a first step according to the present embodiment.
[Fig. 2] Fig. 2 is a cross-sectional view of the first laminate for explaining a second step according to the present embodiment.
[Fig. 3] Fig. 3 is a cross-sectional view of a second laminate for explaining a third step according to the present embodiment.
[Fig. 4] Fig. 4 is a cross-sectional view of a third laminate for explaining a fourth step according to the present embodiment.
[Fig. 5] Fig. 5 is a cross-sectional view of a fourth laminate for explaining a fifth step according to the present embodiment.
[Fig. 6] Fig. 6 is a cross-sectional view of a nonlinear optical laminate for explaining a sixth step according to the present embodiment.
[Fig. 7] Fig. 7 is a diagram showing a bright-field microscope image of a nonlinear optical laminate according to Sample 1.
[Fig. 8] Fig. 8 is a diagram showing a dark-field microscope image of the nonlinear optical laminate according to Sample 1.
[Fig. 9] Fig. 9 is a diagram showing a bright-field microscope image of a nonlinear optical laminate according to Sample 101.
[Fig. 10] Fig. 10 is a diagram showing an absorption spectrum of a nonlinear optical laminate according to Sample 102.
[Fig. 11] Fig. 11 is a diagram showing an absorption spectrum of a nonlinear optical laminate according to Sample 2.
[Fig. 12] Fig. 12 is a diagram showing a cross-sectional scanning electron microscope image of an optical waveguide device according to Sample 4.
[Fig. 13] Fig. 13 is a cross-sectional view of another example of the first laminate according to the present embodiment.
[Fig. 14] Fig. 14 is a cross-sectional view of still another example of the first laminate according to the present embodiment.
[Fig. 15] Fig. 15 presents cross-sectional views of another example of the third laminate, another example of the fourth laminate, and another example of the nonlinear optical laminate, for explaining a sealing film layer according to the present embodiment.
[Fig. 16] Fig. 16 is a cross-sectional view of another nonlinear optical laminate for explaining the sixth step according to the present embodiment.
[Fig. 17] Fig. 17 is a cross-sectional view of still another nonlinear optical laminate for explaining the sixth step according to the present embodiment.
[Fig. 18] Fig. 18 is a cross-sectional view of a different nonlinear optical laminate for explaining the sixth step according to the present embodiment.
[Fig. 19] Fig. 19 is a cross-sectional view of a still different nonlinear optical laminate for explaining the sixth step according to the present embodiment.
[Fig. 20] Fig. 20 is a cross-sectional view of a yet still different nonlinear optical laminate for explaining the sixth step according to the present embodiment.
[Fig. 21] Fig. 21 is a cross-sectional view of a further yet still different nonlinear optical laminate for explaining the sixth step according to the present embodiment.

### DESCRIPTION OF EMBODIMENTS

### [Description of Embodiments of the Present Disclosure]

Firstly, embodiments of the present disclosure are listed and explained.
[1] A method of manufacturing a nonlinear optical laminate according to the present disclosure is a method of manufacturing a nonlinear optical laminate comprising a target substrate and an electro-optic polymer layer positioned on the target substrate, the method comprising, in this order: a first step of preparing a first laminate that is made of a support substrate, a light absorption layer, a first electrode, an electro-optic polymer layer, and a second electrode laminated in this order; a second step of performing a poling process on the electro-optic polymer layer of the first laminate; a third step of removing the second electrode from the first laminate to obtain a second laminate; a fourth step of laminating the target substrate on a surface of the second laminate that was in contact with the second electrode to obtain a third laminate; a fifth step of performing laser peeling of the support substrate from the third laminate to remove the support substrate to obtain a fourth laminate; and a sixth step of removing the light absorption layer and the first electrode from the fourth laminate to obtain a nonlinear optical laminate.
   By this, it is made possible to provide a method of manufacturing a nonlinear optical laminate that can manufacture a nonlinear optical laminate with a good yield.
[2] In [1] above, the light absorption layer may be made of a first resin. By this, it is made possible to provide a method of manufacturing a nonlinear optical laminate that can manufacture a nonlinear optical laminate with a better yield.
[3] In [2] above, a glass transition temperature of the first resin may be higher than a glass transition temperature of the electro-optic polymer layer. By this, it is made possible to provide a method of manufacturing a nonlinear optical laminate that can manufacture a nonlinear optical laminate with a better yield.
[4] In [2] or [3] above, a heat deflection temperature of the first resin may be higher than a glass transition temperature of the electro-optic polymer layer. By this, it is made possible to provide a method of manufacturing a nonlinear optical laminate that can manufacture a nonlinear optical laminate with a better yield.
[5] In any one of [2] to [4] above, the first resin may be polyimide. By this, it is made possible to provide a method of manufacturing a nonlinear optical laminate that can manufacture a nonlinear optical laminate with a better yield.
[6] In any one of [1] to [5] above, a first charge blocking layer may be further laminated between the first electrode and the electro-optic polymer layer in the first laminate. By this, it is made possible to provide a method of manufacturing a nonlinear optical laminate that can manufacture a nonlinear optical laminate with a better yield.
[7] In [6] above, in the sixth step, the first charge blocking layer may also be removed from the fourth laminate. By this, it is made possible to provide a method of manufacturing a nonlinear optical laminate that can manufacture a nonlinear optical laminate with a better yield.
[8] In any one of [1] to [7] above, a second charge blocking layer may be further laminated between the electro-optic polymer layer and the second electrode in the first laminate. By this, it is made possible to provide a method of manufacturing a nonlinear optical laminate that can manufacture a nonlinear optical laminate with a better yield.
[9] In [8] above, in the third step, the second charge blocking layer may also be removed from the first laminate. By this, it is made possible to provide a method of manufacturing a nonlinear optical laminate that can manufacture a nonlinear optical laminate with a better yield.
[10] In any one of [1] to [9] above, in the fourth step, a sealing film layer may be further laminated between the second laminate and the target substrate, and the nonlinear optical laminate may further comprise the sealing film layer positioned between the target substrate and the electro-optic polymer layer. By this, it is made possible to provide a method of manufacturing a nonlinear optical laminate that can manufacture a nonlinear optical laminate with a better yield.

### [Details of Embodiments of the Present Disclosure]

An embodiment of the present disclosure (hereinafter, also referred to as "the present embodiment") will be explained. It should be noted that the present embodiment is not limited to the below description. In the present specification, the expression "(from) A to Z" means the upper limit and the lower limit of a range (that is, it means not less than A and not more than Z). If a description of unit is attached only to Z but not to A, A has the same unit as that of Z.

### [Embodiment 1: Method of manufacturing nonlinear optical laminate]

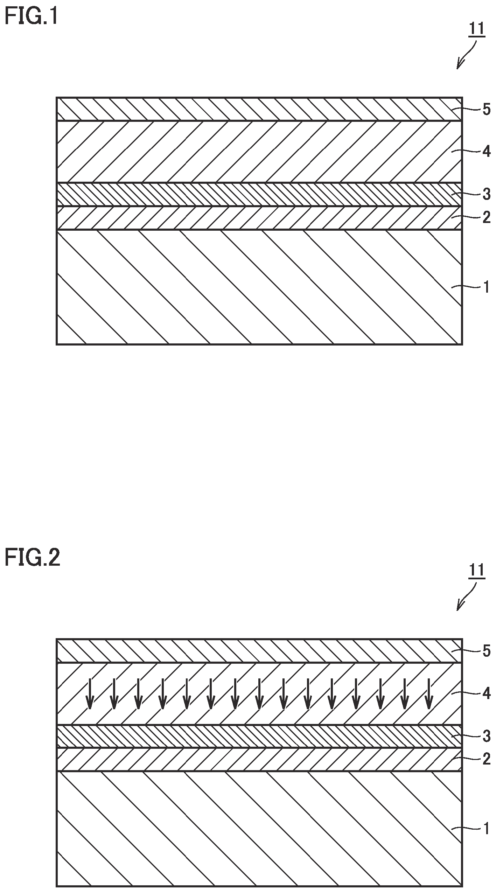

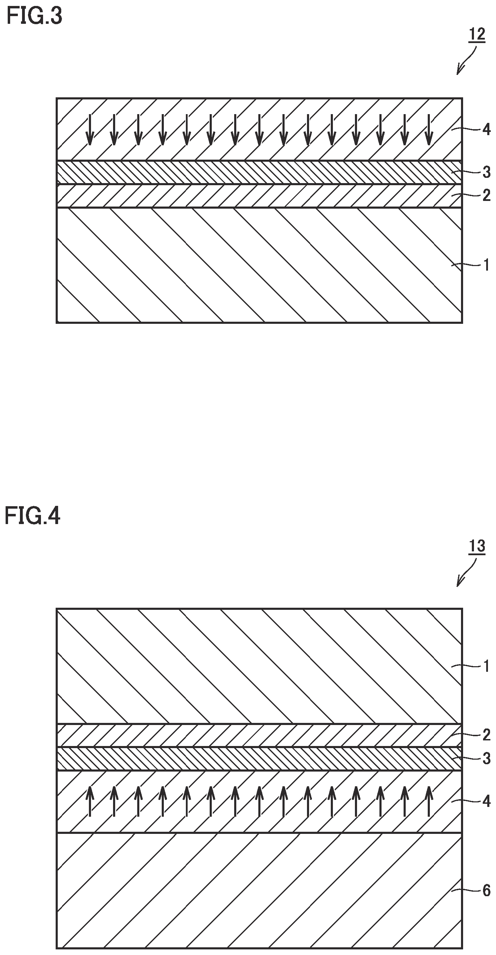

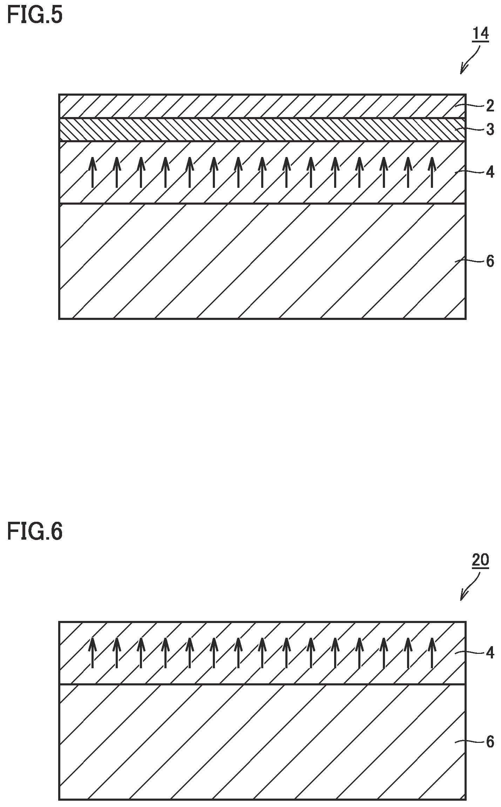

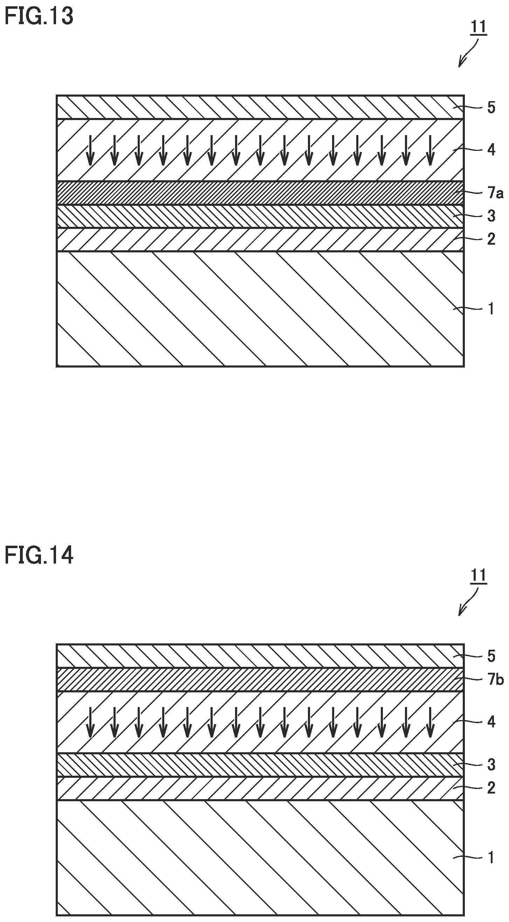

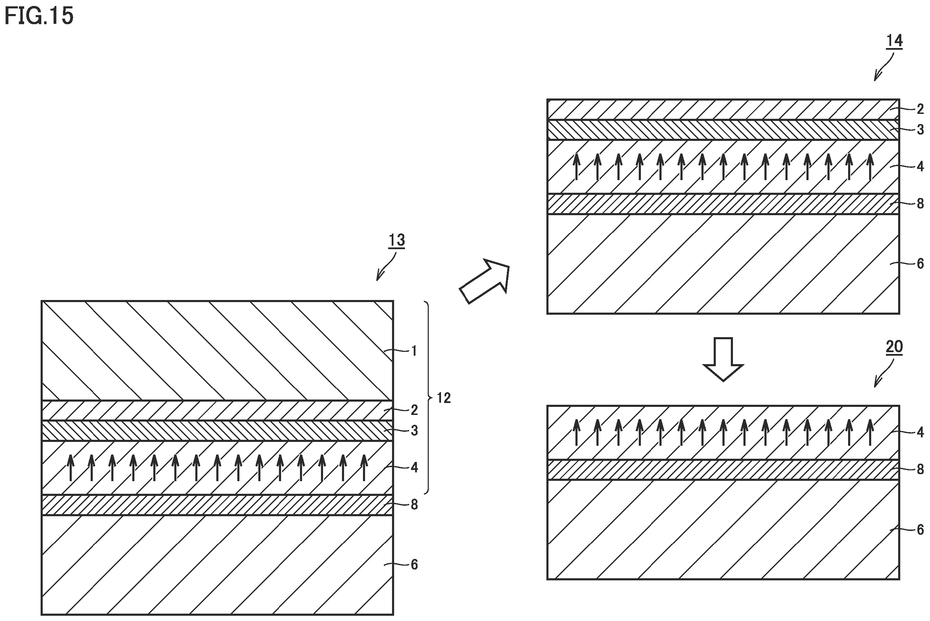

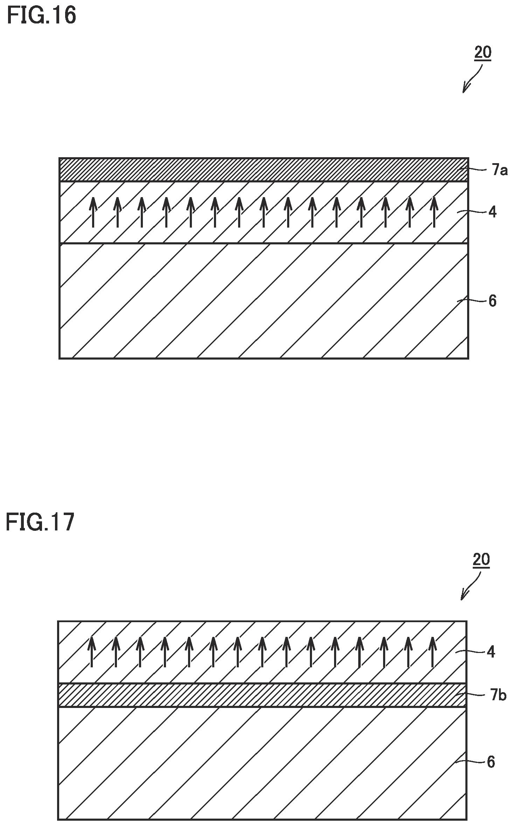

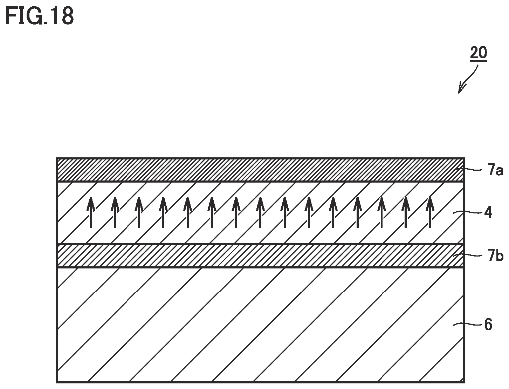

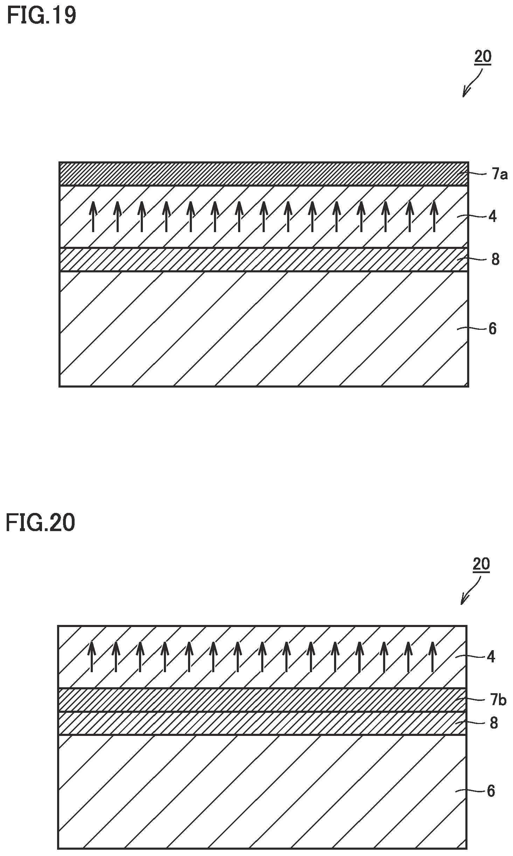

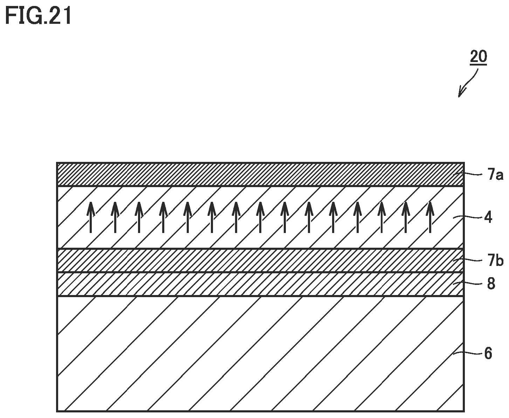

A method of manufacturing a nonlinear optical laminate according to an embodiment of the present disclosure will be explained using Fig. 1 to Fig. 6 and Fig. 13 to Fig. 21. Fig. 1 is a cross-sectional view of a first laminate for explaining a first step according to the present embodiment. Fig. 2 is a cross-sectional view of the first laminate for explaining a second step according to the present embodiment. Fig. 3 is a cross-sectional view of a second laminate for explaining a third step according to the present embodiment. Fig. 4 is a cross-sectional view of a third laminate for explaining a fourth step according to the present embodiment. Fig. 5 is a cross-sectional view of a fourth laminate for explaining a fifth step according to the present embodiment. Fig. 6 is a cross-sectional view of a nonlinear optical laminate for explaining a sixth step according to the present embodiment. Fig. 13 is a cross-sectional view of another example of the first laminate according to the present embodiment. Fig. 14 is a cross-sectional view of still another example of the first laminate according to the present embodiment. Fig. 15 presents cross-sectional views of another example of the third laminate, another example of the fourth laminate, and another example of the nonlinear optical laminate, for explaining a sealing film layer according to the present embodiment. Fig. 16 is a cross-sectional view of another nonlinear optical laminate for explaining the sixth step according to the present embodiment. Fig. 17 is a cross-sectional view of still another nonlinear optical laminate for explaining the sixth step according to the present embodiment. Fig. 18 is a cross-sectional view of a different nonlinear optical laminate for explaining the sixth step according to the present embodiment. Fig. 19 is a cross-sectional view of a still different nonlinear optical laminate for explaining the sixth step according to the present embodiment. Fig. 20 is a cross-sectional view of a yet still different nonlinear optical laminate for explaining the sixth step according to the present embodiment. Fig. 21 is a cross-sectional view of a further yet still different nonlinear optical laminate for explaining the sixth step according to the present embodiment.

A method of manufacturing a nonlinear optical laminate 20 of one embodiment (hereinafter, also referred to as "the present embodiment") of the present disclosure is a method of manufacturing nonlinear optical laminate 20 including a target substrate 6 and an electro-optic polymer layer 4 positioned on target substrate 6, and the method includes, in this order: a first step of preparing a first laminate 11 that is made of a support substrate 1, a light absorption layer 2, a first electrode 3, electro-optic polymer layer 4, and a second electrode 5 laminated in this order; a second step of performing a poling process on electro-optic polymer layer 4 of first laminate 11; a third step of removing second electrode 5 from first laminate 11 to obtain a second laminate 12; a fourth step of laminating target substrate 6 on a surface of second laminate 12 that was in contact with second electrode 5 to obtain a third laminate 13; a fifth step of performing laser peeling of support substrate 1 from third laminate 13 to remove support substrate 1 to obtain a fourth laminate 14; and a sixth step of removing light absorption layer 2 and first electrode 3 from fourth laminate 14 to obtain nonlinear optical laminate 20.

By the present disclosure, it is made possible to provide a method of manufacturing nonlinear optical laminate 20 that can manufacture nonlinear optical laminate 20 with a good yield. The reason is presumed to be as follows.

The method of manufacturing nonlinear optical laminate 20 according to the present embodiment includes "a first step of preparing first laminate 11 that is made of support substrate 1, light absorption layer 2, first electrode 3, electro-optic polymer layer 4, ... laminated in this order", "a fifth step of performing laser peeling of support substrate 1 from third laminate 13 to remove support substrate 1 to obtain fourth laminate 14", and "a sixth step of removing light absorption layer 2 and first electrode 3 from fourth laminate 14 to obtain nonlinear optical laminate 20". By this, fourth laminate 14 including electro-optic polymer layer 4 tends to be uniformly peeled from a support substrate 1 side, and also, structural defects such as cracks in electro-optic polymer layer 4 tend not to be formed because light absorption layer 2 which is not in direct contact with electro-optic polymer layer 4 is destroyed by laser irradiation, and therefore, according to the method of manufacturing nonlinear optical laminate 20, formation of structural defects such as cracks in electro-optic polymer layer 4 can be reduced and the yield can be improved.

As described above, by the present embodiment, it is possible to provide a method of manufacturing nonlinear optical laminate 20 that can manufacture nonlinear optical laminate 20 with a good yield.

Note that in the present embodiment, "nonlinear optical laminate 20" means a laminate that is usable for manufacturing a nonlinear optical element or the like and that includes target substrate 6 and electro-optic polymer layer 4 positioned on target substrate 6.

### <<First Step>>

The first step is a step of preparing first laminate 11 that is made of support substrate 1, light absorption layer 2, first electrode 3, electro-optic polymer layer 4, and second electrode 5 laminated in this order (Fig. 1).

The lamination may be performed by bonding a surface of support substrate 1 and a surface of light absorption layer 2 by covalent bonding, electrostatic interaction, van der Waals interaction, or the like, or by bonding a surface of light absorption layer 2 and a surface of first electrode 3 by covalent bonding, electrostatic interaction, van der Waals interaction, or the like, or by bonding a surface of first electrode 3 and a surface of electro-optic polymer layer 4 by covalent bonding, electrostatic interaction, van der Waals interaction, or the like, or by bonding a surface of electro-optic polymer layer 4 and a surface of second electrode 5 by covalent bonding, electrostatic interaction, van der Waals interaction, or the like.

### <Support Substrate>

In the present embodiment, support substrate 1 may be made of at least one type of material selected from the group consisting of sapphire, quartz glass, synthetic quartz, fused quartz, synthetic quartz glass, borosilicate glass, soda glass, BK7, glass, calcium fluoride, magnesium fluoride, potassium bromide, silicon, barium fluoride, and resin. Support substrate 1 may be composed of a single layer, or may be composed of a plurality of layers made of different materials.

The thickness of support substrate 1 is not particularly limited, but, for example, it may be from 1 µm to 100,000 µm, or from 10 µm to 10,000 µm, or from 100 µm to 3,000 µm. The thickness of "support substrate 1" can be specified by calculating the average value of thicknesses at freely-selected 10 locations.

In support substrate 1, the transmittance of light in the thickness direction of support substrate 1 at the wavelength of the laser beam used for laser peeling may be from 1% to 99.999%. By this, the laser beam efficiently passes through support substrate 1 and light absorption layer 2 is efficiently irradiated with the laser beam, and therefore, it is possible to manufacture nonlinear optical laminate 20 with a better yield. The transmittance of the light may be from 10% to 99.999%, or from 30% to 99.999%, or from 50% to 99.999%.

### <Light Absorption Layer>

In the present embodiment, light absorption layer 2 may be made of a first resin. By this, light absorption layer 2 can be easily formed by a spin coating method or the like, light absorption layer 2 can be efficiently destroyed by laser irradiation, and further, light absorption layer 2 can be easily removed by a dry etching method or the like, and therefore, it is possible to manufacture nonlinear optical laminate 20 with higher throughput and better yield. Note that the case where "light absorption layer 2 is made of a first resin" herein conceptionally encompasses not only a case where "light absorption layer 2 is made of only a first resin" but also a case where it includes unavoidable impurities or the like as long as the effects of the present invention are not impaired. Light absorption layer 2 may be made of at least one type of material selected from the group consisting of semiconductor, oxide, nitride, oxynitride, ferroelectric compound, metal, transparent conductive material, and glass. Light absorption layer 2 may be a gallium nitride (GaN)-based compound crystal layer. Light absorption layer 2 may be composed of a single layer, or may be composed of a plurality of layers made of different materials.

The glass transition temperature of the first resin may be higher than the glass transition temperature of electro-optic polymer layer 4. By this, in the second step, at the time when first laminate 11 is heated to near the glass transition temperature of electro-optic polymer layer 4, deformation of light absorption layer 2 due to heat and accompanying deformation of first electrode 3 are reduced and a short circuit during the poling process is reduced, and therefore, it is possible to manufacture nonlinear optical laminate 20 with a better yield. The glass transition temperature of the first resin may be from 20°C to 800°C, or from 100°C to 600°C, or from 150°C to 500°C, or from 200°C to 400°C. As the glass transition temperature of the first resin increases, in the poling process in the second step, even when the poling process is performed at a high temperature, deformation of light absorption layer 2 due to heat and accompanying deformation of first electrode 3 are reduced and a short circuit during the poling process is reduced, and therefore, even when an electro-optic polymer with a high glass transition temperature is used, it is possible to manufacture nonlinear optical laminate 20 with a better yield. By using an electro-optic polymer with a high glass transition temperature, heat resistance and thermal stability of nonlinear optical laminate 20 can be improved.

The heat deflection temperature (in other words, the deflection temperature under load) of the first resin may be higher than the glass transition temperature of electro-optic polymer layer 4. By this, in the second step of performing the poling process on electro-optic polymer layer 4 of first laminate 11, at the time when first laminate 11 is heated to near the glass transition temperature of electro-optic polymer layer 4, deformation of light absorption layer 2 due to heat and accompanying deformation of first electrode 3 are reduced and a short circuit during the poling process is reduced, and therefore, it is possible to manufacture nonlinear optical laminate 20 with a better yield. The heat deflection temperature of the first resin may be from 20°C to 800°C, or from 100°C to 600°C, or from 150°C to 500°C, or from 200°C to 400°C. As the heat deflection temperature of the first resin increases, in the poling process in the second step, even when the poling process is performed at a high temperature, deformation of light absorption layer 2 due to heat and accompanying deformation of first electrode 3 are reduced and a short circuit during the poling process is reduced, and therefore, even when an electro-optic polymer with a high glass transition temperature is used, it is possible to manufacture nonlinear optical laminate 20 with a better yield. By using an electro-optic polymer with a high glass transition temperature, heat resistance and thermal stability of nonlinear optical laminate 20 can be improved. Note that a heat deflection temperature herein can also be referred to as a deflection temperature under load. The heat deflection temperature means the temperature measured under a condition of a load of 1.80 MPa in accordance with ISO 75.

The first resin may be at least one type of resin or the like selected from the group consisting of polyimide, polycarbonate, phenol resin, aromatic polyether ketone (including polyether ketone (PEK), polyether ether ketone (PEEK), polyether ketone ketone (PEKK), and polyether ether ketone ketone (PEEKK)), epoxy resin, melamine resin, polyamide imide, polyether imide, Teflon (registered trademark), urea resin, unsaturated polyester, polyether sulfone, wholly aromatic polyester, polybenzimidazole, polysulfone, polyarylate, polydicyclopentanyl methacrylate (poly DCPMA), poly(DCPMA-co-MMA), polyadamantyl methacrylate (poly AdMA), poly(AdMA-co-MMA), cycloolefin polymer, cycloolefin copolymer, polystyrene, polyethylene, polymethylpentene, polypropylene, polyvinyl alcohol (PVA), polyethylene terephthalate, polyester, polyolefin, polyphenylene sulfide, polyurea, silicon-based resin, and fluororesin. In particular, from the viewpoint of enabling manufacturing of a nonlinear optical laminate with a better yield, the first resin is preferably polyimide. The first resin may be a thermoplastic resin, or a curable resin including a thermosetting resin, or a cross-linkable resin. In particular, in a case where the first resin is polyimide, the glass transition temperature and the heat deflection temperature of the polyimide are typically from 200°C to 400°C, which is higher than the glass transition temperature of electro-optic polymer layer 4 (which is typically from 50°C to 200°C), and therefore, in the second step, at the time when first laminate 11 is heated to near the glass transition temperature of electro-optic polymer layer 4, deformation of light absorption layer 2 due to heat and accompanying deformation of first electrode 3 are reduced and a short circuit during the poling process is reduced, and therefore, it is possible to manufacture nonlinear optical laminate 20 with a better yield. Further, in the case where the first resin is polyimide, since the polyimide has high surface smoothness, at the time when first electrode 3 is formed in the first step, first electrode 3 having high surface smoothness can be formed and a short circuit during the poling process is reduced, and therefore, it is possible to manufacture nonlinear optical laminate 20 with a better yield. The structure of the polyimide is not particularly limited.

In light absorption layer 2, the absorption coefficient at the wavelength of the laser beam used for laser peeling may be from 0.01 cm⁻¹ to 1,000,000,000 cm⁻¹, or from 1 cm⁻¹ to 1,000,000,000 cm⁻¹, or from 100 cm⁻¹ to 1,000,000,000 cm⁻¹. As the absorption coefficient of light absorption layer 2 at the wavelength of the laser beam used for laser peeling is great, at the time of the laser peeling in the fifth step, the laser beam is efficiently absorbed by light absorption layer 2, light absorption layer 2 is efficiently laser-destroyed, and support substrate 1 is laser-peeled from third laminate 13 described later, and further, the power of the laser beam that passes through light absorption layer 2 and first electrode 3 and is applied to electro-optic polymer layer 4 decreases, and optical damage of the electro-optic polymer included in electro-optic polymer layer 4 due to the laser beam is reduced, and therefore, it is possible to manufacture nonlinear optical laminate 20 in which damage to the electro-optic polymer included in electro-optic polymer layer 4 is reduced, with a better yield.

The thickness of light absorption layer 2 may be from 0.0001 µm to 100,000 µm. By this, removal of light absorption layer 2 in the sixth step can be achieved in a short time, and in the laser peeling in the fifth step, the power of the laser beam that passes through light absorption layer 2 and first electrode 3 and is applied to electro-optic polymer layer 4 decreases, and thereby, optical damage of the electro-optic polymer included in electro-optic polymer layer 4 due to the laser beam is reduced; therefore, it is possible to manufacture nonlinear optical laminate 20 in which damage to the electro-optic polymer included in electro-optic polymer layer 4 is reduced, with higher throughput and better yield. The thickness of light absorption layer 2 may be from 0.01 µm to 100 µm, or from 0.1 µm to 20 µm. It can be specified by the same method as the method of measuring "the thickness of support substrate 1" except that the measurement target is "light absorption layer 2". It is more preferable that the thickness of light absorption layer 2 be not too thin and not too thick so as to achieve easy removal while reducing transmission of laser light, and from this viewpoint, the thickness of light absorption layer 2 is more preferably from 0.1 µm to 20 µm.

### <First Electrode>

In the present embodiment, "first electrode 3" may be made of a metal such as "gold (Au), silver (Ag), copper (Cu), platinum (Pt), or aluminum (Al)" and/or a transparent electrode material such as "indium tin oxide (ITO), indium zinc oxide (IZO), FTO (fluorine-doped tin oxide), IGZO (InGaZnO), AZO (aluminum-doped zinc oxide), or GZO (gallium-doped zinc oxide)." First electrode 3 may be composed of a single layer, or may be composed of a plurality of layers made of different materials.

The thickness of first electrode 3 is not particularly limited, but, for example, it may be from 0.0001 µm to 100,000 µm, or from 0.001 µm to 100 µm, or from 0.01 µm to 10 µm. It can be specified by the same method as the method of measuring "the thickness of support substrate 1" except that the measurement target is "first electrode 3".

### <Electro-optic Polymer Layer>

In the present embodiment, "electro-optic polymer layer 4" means a layer composed of a second resin. Note that the second resin means an electro-optic polymer.

In the present embodiment, an "electro-optic polymer" (which may also be referred to as an "EO polymer" hereinafter) is a polymer that exhibits a second-order nonlinear optical effect, and it includes (1) a guest-host type electro-optic polymer in which a matrix polymer and electro-optic molecules are mixed, (2) a side-chain type electro-optic polymer in which an electro-optic molecule is covalently bonded to a side chain of a base polymer, (3) a main-chain type electro-optic polymer in which an electro-optic molecule is covalently bonded in a main chain of a base polymer, (4) a cross-linked type electro-optic polymer having a crosslinkage between matrix polymers, or between base polymers, or between a matrix polymer or a base polymer and an electro-optic molecule or the like, and (5) a molecular glass type electro-optic polymer. The molecular glass type electro-optic polymer is an electro-optic polymer (electro-optic material) that includes electro-optic molecules as a main component, and these electro-optic molecules may be cross-linked with each other. The guest-host type electro-optic polymer can also be understood as a composition including a matrix polymer and electro-optic molecules.

Examples of the second-order nonlinear optical effect include second harmonic generation, optical rectification, sum frequency generation, difference frequency generation, optical parametric oscillation/amplification, electro-optic effect (Pockels effect), and the like.

In the present embodiment, "matrix polymer" means a polymer serving as a matrix of an electro-optic polymer. The matrix polymer includes an organic polymer serving as a host of a guest-host type electro-optic polymer. Further, "base polymer" means a polymer serving as a basic skeleton of an electro-optic polymer. The base polymer includes an organic polymer of a polymer main chain in a side-chain type, main-chain type, or cross-linked type electro-optic polymer. As the matrix polymer and the base polymer, a transparent polymer without scattering is preferable for use as an optical material, and examples thereof include (meth)acrylate-based polymers (for example, polymethyl methacrylate (PMMA)), polyamide, polyimide, polycarbonate (for example, poly[Bisphenol A carbonate-co-4,4'-(3,3,5-trimethylcyclo-hexylidene)diphenol carbonate] or the like), polydicyclopentanyl methacrylate (poly DCPMA), polyadamantyl methacrylate (poly AdMA), poly(DCPMA-co-MMA), poly(AdMA-co-MMA), cycloolefin polymer, cycloolefin copolymer, polystyrene, polyethylene, polymethylpentene, polypropylene, polyvinyl alcohol (PVA), polyethylene terephthalate, polysulfone, polyether sulfone, polyester, polyolefin, polyphenylene sulfide, polyurea, silicon-based resin, epoxy-based resin, fluororesin, and the like. One of these organic polymers may be used alone, or a plurality of them may be used in combination.

In the present embodiment, "electro-optic molecule" means a compound that exhibits a second-order nonlinear optical effect. Examples of the electro-optic molecule include compounds that exhibit a second-order nonlinear optical effect described in, for example, the specification of U.S. Patent No. 6,067,186, Japanese National Patent Publication No. 2004-501159, WO 2011/024774 A1, "Organic Materials for Nonlinear Optics" (edited by the Chemical Society of Japan, Quarterly Chemical Review No. 15 (1992)), "Organic Nonlinear Optical Materials" (Ch. Bosshard, et al., Gordonand Breach Publishers (1995)), "Recent Advance on Photonic Organic Materials for Information and Telecommunication Applications" (supervised by Toshikuni Kaino, CMC Publishing (2007)), and "Molecular Nonlinear Optics" (ed. J. Zyss, Academic Press (1994)), and the like.

The electro-optic molecule is not particularly limited as long as it is a compound that exhibits a second-order nonlinear optical effect, but preferably, it is a compound that has a conjugated chemical structure and further has an electron-donating group and an electron-withdrawing group in the molecule. Here, examples of the conjugated chemical structure include aromatic compounds such as benzene, naphthalene, anthracene, perylene, biphenyl, indene, and stilbene, heterocyclic compounds such as furan, pyran, pyrrole, imidazole, pyrazole, thiophene, thiazole, pyridine, pyridazine, pyrimidine, pyrazine, quinoline, and coumarin, and compounds in which these compounds are bonded to each other via a carbon-carbon unsaturated bond or a nitrogen-nitrogen unsaturated bond, and the like.

Examples of the electron-donating group include an amino group, an alkoxy group, an allyloxy group, a thioether group, and the like that may be substituted with an alkyl group, an aryl group, or an acyl group. Examples of the electron-withdrawing group include a nitro group, a cyano group, a dicyanovinyl group, a tricyanovinyl group, a halogen atom, a carbonyl group, a sulfone group, a perfluoroalkyl, a tricyanovinylfuran, a tricyanofuran, and the like.

Examples of the electro-optic molecule include compounds represented by the following structural formulas [A-1] to [A-7], and the like. One of them can be used alone, or two or more of them can be used in combination.

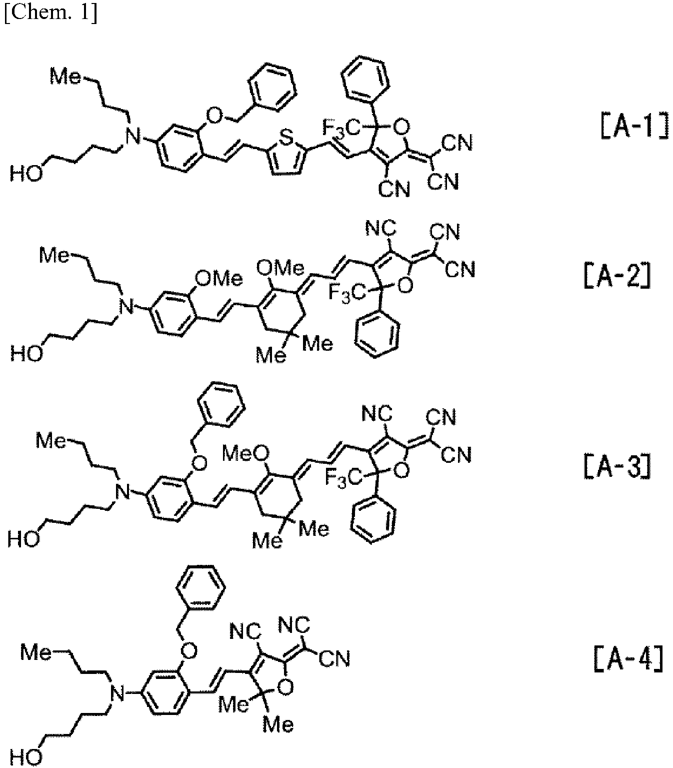

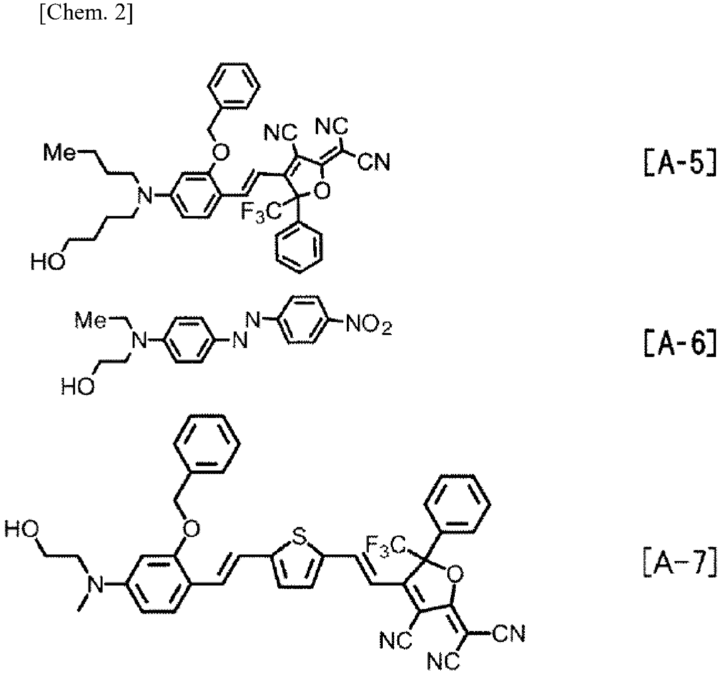

The content ratio of the electro-optic molecules is not particularly limited, but usually, it is from about 1 to 70 mass%, preferably from about 5 to 60 mass%, more preferably from about 10 to 50 mass%, with respect to the total amount of the matrix polymer or the base polymer and the electro-optic molecules (corresponding to the total mass of the electro-optic polymer). The above-mentioned content ratio also applies when the electro-optic polymer is in the form of side-chain type or main-chain type. Here, in the case of a side-chain type electro-optic polymer, the content ratio of the electro-optic molecules is to be determined based on electro-optic molecules from which a side chain portion is derived. In the case of a main-chain type electro-optic polymer, the content ratio of electro-optic dyes is to be determined based on the electro-optic molecule portion in the main chain.

The electro-optic polymer may be, for example, a side-chain type electro-optic polymer having repeating units represented by Formulas (1) to (3). In the formulas, p, q, and r each indicate a positive integer. Here, the side-chain type electro-optic polymer may be a copolymer of a repeating unit (for example, a repeating unit represented by Formula (1) and/or Formula (3)) constituting a base polymer that does not include an electro-optic molecule portion as a side chain, and a repeating unit (for example, a repeating unit represented by Formula (2)) constituting a base polymer that includes an electro-optic molecule portion as a side chain. In this case, the copolymer may be any of a random copolymer, a block copolymer, and a graft copolymer.

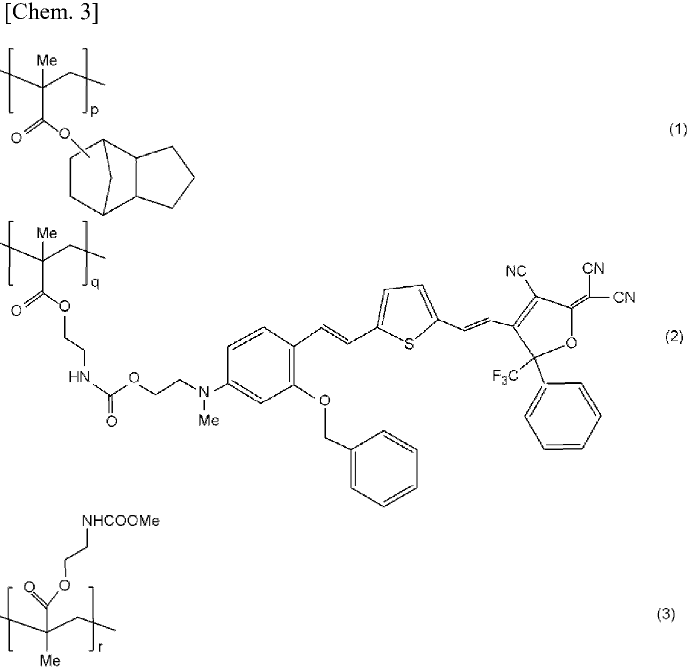

The thickness of electro-optic polymer layer 4 is not particularly limited, but, for example, it may be from 0.0001 µm to 100,000 µm, or from 0.001 µm to 100 µm, or from 0.01 µm to 20 µm. The thickness of electro-optic polymer layer 4 can be specified by the same method as the method of measuring "the thickness of support substrate 1" except that the measurement target is "electro-optic polymer layer 4".

The method of manufacturing electro-optic polymer layer 4 is not particularly limited, and examples thereof include a spin coating method, a dip coating method, a spray coating method, a bar coating method, a flow coating method, a gravure coating method, a roll coating method, and the like.

### <Second Electrode>

In the present embodiment, "second electrode 5" may be made of a metal such as "gold (Au), silver (Ag), copper (Cu), platinum (Pt), and aluminum (Al)" and/or a transparent electrode material such as "indium tin oxide (ITO), indium zinc oxide (IZO), FTO (fluorine-doped tin oxide), IGZO (InGaZnO), AZO (aluminum-doped zinc oxide), and GZO (gallium-doped zinc oxide)". Second electrode 5 may be composed of a single layer, or may be composed of a plurality of layers made of different materials.

The thickness of "second electrode 5" is not particularly limited, but, for example, it may be from 0.0001 µm to 100,000 µm, or from 0.001 µm to 100 µm, or from 0.01 µm to 10 µm. It can be specified by the same method as the method of measuring "the thickness of support substrate 1" except that the measurement target is "second electrode 5".

### <First Charge Blocking Layer>

In first laminate 11, a first charge blocking layer 7a may be further laminated between first electrode 3 and electro-optic polymer layer 4 (Fig. 13). By this, in the poling process in the second step, the current is reduced and thereby a short circuit during the poling process is reduced, and therefore, a nonlinear optical laminate can be manufactured with a better yield. Note that in a case where first charge blocking layer 7a is further laminated between first electrode 3 and electro-optic polymer layer 4 in first laminate 11, first charge blocking layer 7a may also be removed from fourth laminate 14 in the sixth step to be described later. Examples of the method of also removing first charge blocking layer 7a from the fourth laminate include a method of performing dry etching, wet etching, chemical mechanical polishing, or mechanical polishing.

First charge blocking layer 7a may be made of at least one type of material selected from the group consisting of, for example, oxides (Al₂O₃, HfO₂, SiO₂, TiO₂, SrTiO₃, Ta₂O₅, Gd₂O₃, ZrO₂, Ga₂O₃, V₂O₅, Co₃O₄, ZnO, ZnO:Al, ZnO:B, In₂O₃:H, WO₃, MoO₃, Nb₂O₅, NiO, MgO, RuO₂), fluorides (MgF₂, AlF₃), nitrides (TiN, TaN, Si₃N₄, AlN, GaN, WN, HfN, NbN, GdN, VN, ZrN), sulfides (ZnS, MoS₂), aluminum alkoxides, benzocyclobutene (BCB), polymethylsiloxane, polydimethylsiloxane, and resins. First charge blocking layer 7a may be formed by an atomic layer deposition method, a plasma CVD method, a physical vapor deposition method, or a spin coating method. First charge blocking layer 7a may have a function of reducing the current in the poling process in the second step. First charge blocking layer 7a may be composed of a single layer, or may be composed of a plurality of layers made of different materials. The thickness of first charge blocking layer 7a may be, for example, from 0.000001 µm to 10,000 µm, or from 0.00001 µm to 10 µm, or from 0.0001 µm to 0.1 µm. The thickness of first charge blocking layer 7a can be specified by the same method as the method of measuring "the thickness of support substrate 1" except that the measurement target is "first charge blocking layer 7a".

### <Second Charge Blocking Layer>

In first laminate 11, a second charge blocking layer 7b may be further laminated between electro-optic polymer layer 4 and second electrode 5 (Fig. 14). By this, in the poling process in the second step, the current is reduced and thereby a short circuit during the poling process is reduced, and therefore, nonlinear optical laminate 20 can be manufactured with a better yield. Note that in a case where second charge blocking layer 7b is further laminated between electro-optic polymer layer 4 and second electrode 5 in first laminate 11, second charge blocking layer 7b may also be removed from first laminate 11 in the third step to be described later. Examples of the method of also removing second charge blocking layer 7b from first laminate 11 include a method of performing dry etching, wet etching, chemical mechanical polishing, or mechanical polishing.

Second charge blocking layer 7b may be made of at least one type of material selected from the group consisting of, for example, oxides (Al₂O₃, HfO₂, SiO₂, TiO₂, SrTiO₃, Ta₂O₅, Gd₂O₃, ZrO₂, Ga₂O₃, V₂O₅, Co₃O₄, ZnO, ZnO:Al, ZnO:B, In₂O₃:H, WO₃, MoO₃, Nb₂O₅, NiO, MgO, RuO₂), fluorides (MgF₂, AlF₃), nitrides (TiN, TaN, Si₃N₄, AlN, GaN, WN, HfN, NbN, GdN, VN, ZrN), sulfides (ZnS, MoS₂), aluminum alkoxides, benzocyclobutene (BCB), polymethylsiloxane, polydimethylsiloxane, and resins. Second charge blocking layer 7b may be formed by an atomic layer deposition method, a plasma CVD method, a physical vapor deposition method, or a spin coating method. Second charge blocking layer 7b may have a function of reducing the current in the poling process in the second step. Second charge blocking layer 7b may be composed of a single layer, or may be composed of a plurality of layers made of different materials. The thickness of second charge blocking layer 7b may be, for example, from 0.000001 µm to 10,000 µm, or from 0.00001 µm to 10 µm, or from 0.0001 µm to 0.1 µm. The thickness of second charge blocking layer 7b can be specified by the same method as the method of measuring "the thickness of support substrate 1" except that the measurement target is "second charge blocking layer 7b".

### <<Second Step>>

The second step is a step of performing a poling process on electro-optic polymer layer 4 of first laminate 11 (Fig. 2).

In the present embodiment, "poling process" means a process of orienting electro-optic molecules and fixing the orientation. The poling process is not particularly limited, but examples thereof include a method of sandwiching electro-optic polymer layer 4 between first electrode 3 and second electrode 5 and applying a voltage at near the glass transition temperature of electro-optic polymer layer 4, a method of performing corona discharge on electro-optic polymer layer 4, and the like. For example, as shown in Fig. 2, the poling process may be carried out on electro-optic polymer layer 4 by applying a voltage between first electrode 3 and second electrode 5 at near the glass transition temperature of electro-optic polymer layer 4. Note that in Fig. 2 to Fig. 6, arrows represent that the electro-optic molecules in electro-optic polymer layer 4 are oriented by the poling process.

### <<Third Step>>

The third step is a step of removing second electrode 5 from first laminate 11 (in other words, first laminate 11 on which the poling process has been performed in the second step) to obtain second laminate 12 (Fig. 3).

Examples of the method of removing second electrode 5 from first laminate 11 (in other words, first laminate 11 on which the poling process has been performed in the second step) include wet etching, dry etching, chemical mechanical polishing, mechanical polishing, and the like.

### <<Fourth Step>>

The fourth step is a step of laminating target substrate 6 on a surface of second laminate 12 that was in contact with second electrode 5 to obtain third laminate 13 (Fig. 4). The "surface of second laminate 12 that was in contact with second electrode 5" can also be regarded as "a surface of the third laminate exposed by the third step". The lamination may be performed by pressure bonding performed after plasma treatment and silane coupling treatment, for example.

### <Target Substrate>

In the present embodiment, "target substrate 6" means a substrate that supports electro-optic polymer layer 4. Target substrate 6 may have a single-layer structure or may have a multi-layer structure depending on the application of the resulting nonlinear optical laminate 20. Target substrate 6 can be properly set depending on the application of the resulting nonlinear optical laminate 20.

Examples of target substrate 6 include glass (for example, BK7 and the like), SiO₂ (for example, quartz glass), sol-gel glass (for example, MAPTMS and the like), fluororesin (for example, PTFE, CYTOP (Asahi Glass, registered trademark), Teflon (The Chemours Company, registered trademark) AF, and the like), polycarbonate (for example, poly[Bisphenol A carbonate-co-4,4'-(3,3,5-trimethylcyclo-hexylidene)diphenol carbonate] and the like), (meth)acrylate polymer (for example, polymethyl methacrylate (PMMA)), polydicyclopentanyl methacrylate (poly DCPMA), polyadamantyl methacrylate (poly AdMA), poly(DCPMA-co-MMA), poly(AdMA-coMMA), cycloolefin polymer (for example, ZEONEX (Zeon Corporation, registered trademark), ZEONOR (Zeon Corporation, registered trademark), ARTON (JSR, registered trademark), and the like), cycloolefin copolymer (TOPAS (Topas Advanced Polymers GmbH, registered trademark), APEL (Mitsui Chemicals, registered trademark), and the like), Tsurupica (registered trademark), Daikyo Resin CZ, polystyrene, polyethylene, polymethylpentene (TPX (Mitsui Chemicals, registered trademark)), polypropylene, polyimide, polyvinyl alcohol (PVA), polyethylene terephthalate, ultraviolet curable resin (for example, SU8, Master Bond UV15, UV15LV, Norland NOA61, NOA65, NOA71, NOA73, and the like), electro-optic polymer (including poly(Disperse Red 1 acrylate), poly(Disperse Red 1 methacrylate), poly(Disperse Red 13 acrylate), poly(Disperse Red 13 methacrylate), poly(Disperse Orange 3 acrylamide), poly(Disperse Orange 3 methacrylamide), poly(Disperse Yellow 7 acrylate), and poly(Disperse Yellow 7 methacrylate)), and the like. One of them can be used alone, or two or more of them can be used in combination. In addition, target substrate 6 may include dye molecules (including electro-optic molecules).

Further, examples of target substrate 6 include a semiconductor, an oxide, a nitride, an oxynitride, a ferroelectric compound, a metal, a transparent conductive material, and the like. Examples of the semiconductor include group IV semiconductors such as diamond (C), silicon (Si), boron-doped silicon, phosphorus-doped silicon, silicon carbide (SiC), silicon germanium (SiGe), and germanium (Ge), group III-V semiconductors such as gallium arsenide (GaAs), indium phosphide (InP), gallium nitride (GaN), and gallium phosphide (GaP), and group II-VI semiconductors such as zinc selenide (ZnSe), cadmium sulfide (CdS), cadmium selenide (CdSe), cadmium telluride (CdTe), zinc sulfide (ZnS), zinc selenide (ZnSe), zinc telluride (ZnTe), and cadmium zinc telluride (CdZnTe), and the like. Examples of the oxide include silicon oxide, metal oxide [for example, titanium oxide (TiO₂), aluminum oxide (Al₂O₃), hafnium oxide (HfO₂), lanthanum oxide (La₂O₃), zirconium dioxide (ZrO₂), yttrium oxide (Y₂O₃), tantalum pentoxide (Ta₂O₅), zinc oxide (ZnO), gallium oxide (Ga₂O₃), magnesium oxide (MgO), and the like], hafnium silicate (HfSiO₄), silicon dioxide (SiO₂), and the like. Examples of the nitride include silicon nitride, carbon nitride, metal nitride [for example, aluminum nitride (AlN), titanium nitride (TiN), hafnium nitride (HfN), and the like], and the like. Examples of the oxynitride include silicon oxynitride, metal oxynitride [for example, aluminum oxynitride (AlON), hafnium oxynitride (HfON), and the like], and the like. Examples of the ferroelectric compound include lithium niobate (LiNbO₃), lithium tantalate (LiTaO₃), lanthanum-doped lead zirconate titanate (PLZT), and the like. Examples of the metal include gold (Au), silver (Ag), copper (Cu), platinum (Pt), aluminum (Al), and the like. Examples of the transparent conductive material include ITO, IZO, FTO (fluorine-doped tin oxide), IGZO (InGaZnO), AZO (aluminum-doped zinc oxide), GZO (gallium-doped zinc oxide), SnO₂, and the like. One of them can be used alone, or two or more of them can be used in combination. The above-mentioned materials are suitable for use in a layer of target substrate 6, in a case where it has a multi-layer structure, that is to come into contact with electro-optic polymer layer 4.

The thickness of target substrate 6 is not particularly limited, but, for example, it may be from 1 µm to 100,000 µm, or from 10 µm to 10,000 µm, or from 100 µm to 3,000 µm. The thickness of target substrate 6 can be specified by the same method as the method of measuring "the thickness of support substrate 1" except that the measurement target is "target substrate 6".

### <Sealing Film Layer>

In the fourth step, a sealing film layer 8 may be further laminated between second laminate 12 and target substrate 6 (Fig. 15). By this, it becomes possible to manufacture nonlinear optical laminate 20 with a better yield. Sealing film layer 8 may have a function of reducing permeation of oxygen and/or water. By this, photodegradation of the resulting nonlinear optical laminate 20 is reduced, and therefore, it is possible to manufacture nonlinear optical laminate 20 excellent in light resistance with a better yield. Note that in a case where sealing film layer 8 is further laminated between second laminate 12 and target substrate 6 in the fourth step, nonlinear optical laminate 20 further includes sealing film layer 8 positioned between target substrate 6 and electro-optic polymer layer 4.

The sealing film layer may be made of at least one type of material selected from the group consisting of, for example, oxides (Al₂O₃, HfO₂, SiO₂, TiO₂, SrTiO₃, Ta₂O₅, Gd₂O₃, ZrO₂, Ga₂O₃, V₂O₅, Co₃O₄, ZnO, ZnO:Al, ZnO:B, In₂O₃:H, WO₃, MoO₃, Nb₂O₅, NiO, MgO, RuO₂), fluorides (MgF₂, AlF₃), nitrides (TiN, TaN, Si₃N₄, AlN, GaN, WN, HfN, NbN, GdN, VN, ZrN), sulfides (ZnS, MoS₂), aluminum alkoxides, benzocyclobutene (BCB), polymethylsiloxane, polydimethylsiloxane, and resins. The sealing film layer may be formed by an atomic layer deposition method, a plasma CVD method, a physical vapor deposition method, or a spin coating method. Sealing film layer 8 may be composed of a single layer, or may be composed of a plurality of layers made of different materials. The thickness of sealing film layer 8 may be, for example, from 0.0001 µm to 100,000 µm, or from 0.001 µm to 100 µm, or from 0.01 µm to 10 µm. The thickness of sealing film layer 8 can be specified by the same method as the method of measuring "the thickness of support substrate 1" except that the measurement target is "sealing film layer 8".

### <<Fifth Step>>

The fifth step is a step of performing laser peeling of support substrate 1 from third laminate 13 to remove support substrate 1 to obtain fourth laminate 14 (Fig. 5). Here, "performing laser peeling of support substrate 1 from third laminate 13" means peeling support substrate 1 from third laminate 13 by destroying light absorption layer 2 by irradiating light absorption layer 2 with a laser beam. Note that "performing laser peeling" can also be referred to as "peeling by laser lift-off". Since light absorption layer 2 is destroyed by the laser beam, electro-optic polymer layer 4 easily peels uniformly from support substrate 1, and thus, according to the method of manufacturing nonlinear optical laminate 20, the yield can be improved. Note that by the laser peeling, light absorption layer 2 may be completely destroyed (in other words, fourth laminate 14 may not include light absorption layer 2), or a part of light absorption layer 2 may remain (in other words, fourth laminate 14 may include light absorption layer 2). Note that in the laser peeling, light absorption layer 2 may be destroyed by laser beam irradiation at a surface of third laminate 13 on the support substrate 1 side. Note that the destruction of light absorption layer 2 by the laser beam irradiation at the time of the laser peeling may be destruction due to single-photon absorption, or destruction due to two-photon absorption, or destruction due to three-photon absorption, or destruction due to multi-photon absorption.

The wavelength of the laser beam may be from 100 nm to 10000 nm. By this, the light absorption layer is efficiently destroyed by the laser irradiation, and therefore, it is possible to manufacture nonlinear optical laminate 20 with a better yield. The wavelength of the laser beam may be from 100 nm to 1100 nm, or from 100 nm to 400 nm, or from 100 nm to 300 nm.

The repetition frequency of the laser beam may be from 0.001 kHz to 1,000,000,000 kHz. By this, it is possible to manufacture nonlinear optical laminate 20 with a better yield. The repetition frequency of the laser beam may be from 0.01 kHz to 1,000,000 kHz, or from 0.1 kHz to 1000 kHz. The laser beam may be a continuous-wave laser beam.

The average output of the laser beam may be from 0.0001 W to 100,000 W. By this, it is possible to manufacture nonlinear optical laminate 20 with a better yield. The average output of the laser beam may be from 0.001 W to 100 W, or from 0.01 W to 10 W.

The pulse width of the laser beam may be from 0.001 ps to 10,000,000 ps. By this, it is possible to manufacture nonlinear optical laminate 20 with a better yield. The pulse width of the laser beam may be from 0.1 ps to 1,000,000 ps, or from 1 ps to 100,000 ps. The laser beam may be a continuous-wave laser beam.

The diameter of the beam (hereinafter, also referred to as the "beam diameter") at the time when the laser beam is applied to light absorption layer 2 may be from 0.1 µm to 1000 µm. By this, it is possible to manufacture nonlinear optical laminate 20 with a better yield. The beam diameter may be from 0.05 µm to 10000 µm, or from 0.01 µm to 100000 µm. As the beam diameter decreases, light absorption layer 2 tends to be laser-destroyed efficiently even if the power of the laser beam is small, but the throughput of the laser peeling tends to decrease.

### <<Sixth Step>>

The sixth step is a step of removing light absorption layer 2 and first electrode 3 from fourth laminate 14 to obtain nonlinear optical laminate 20 (Fig. 6, Fig. 16 to Fig. 21). Examples of the method of removing light absorption layer 2 from fourth laminate 14 include a method of removing light absorption layer 2 from fourth laminate 14 by performing dry etching, wet etching, chemical mechanical polishing, or mechanical polishing. Examples of the method of removing first electrode 3 from fourth laminate 14 include a method of removing first electrode 3 from fourth laminate 14 by performing wet etching, dry etching, chemical mechanical polishing, or mechanical polishing.

The method of manufacturing nonlinear optical laminate 20 according to the present embodiment may further include other steps such as "a step to be implemented after the sixth step, to process electro-optic polymer layer 4 that has been subjected to the poling process". Examples of the other steps include (1) laminating another layer on electro-optic polymer layer 4 that has been subjected to the poling process, by sputtering or the like (not shown), (2) performing photolithography or the like to form a mask on electro-optic polymer layer 4 that has been subjected to the poling process, and then performing dry etching or the like to process electro-optic polymer layer 4 into a waveguide structure or the like (not shown), (3) laminating, on the waveguide obtained by processing electro-optic polymer layer 4 that has been subjected to the poling process, a new layer (for example, an upper cladding layer) (not shown), and (4) further laminating, on electro-optic polymer layer 4 that has been subjected to the poling process and laminated on a support, another electro-optic polymer layer 4 that has been subjected to the poling process (not shown).

### [Examples]

Hereinafter, the present invention will be described in detail with reference to examples, but the present invention is not limited to these.

### [Example 1]

### <<Preparation of Nonlinear Optical Laminate>>

Nonlinear optical laminates according to Sample 1 to Sample 4, Sample 101, and Sample 102 were prepared as follows.

### <Preparation of Nonlinear Optical Laminates according to Sample 1 to Sample 4>

Firstly, a support substrate, a light absorption layer, a first electrode, an electro-optic polymer layer, and a second electrode were laminated in this order to prepare a first laminate (first step). Note that as the support substrate, a sapphire substrate (C plane (0001)) having a size of 30 mm×35 mm and a thickness of 600 µm was prepared by dicing using a diamond blade. As the light absorption layer, a polyimide coating material (non-photosensitive polyimide (Semicofine (registered trademark)) manufactured by Toray Industries, Inc.) was applied onto a surface of the support substrate by a spin coating method, and the resultant was subjected to heat treatment at 300°C on a hot plate to prepare a light absorption layer having a thickness of 2.8 µm. The first electrode was prepared by forming an IZO film with a thickness of 100 nm on a surface of the light absorption layer by an RF sputtering method, and then performing oxygen plasma treatment with a reactive ion etching apparatus, followed by treatment with a silane coupling agent having an amino group (manufactured by Shin-Etsu Chemical Co., Ltd., KBP-90). As the electro-optic polymer layer, a layer of a side-chain type electro-optic polymer (random copolymer) including repeating units of the following chemical formulas (1) to (3) (in the formulas, p, q, and r each indicate a positive integer) that was prepared by spin coating formation and heat treatment at 170°C was used. The glass transition temperature of the electro-optic polymer used for preparation of Sample 1 to Sample 4 was 160°C. Table 1 shows the number of rotations of spin coating performed for forming the electro-optic polymer layer in the first step, the concentration of an electro-optic polymer solution used for spin coating, and the thickness of the electro-optic polymer layer in the first laminate, for Sample 1 to Sample 4. As the second electrode, an IZO film having a thickness of 100 nm formed by an RF sputtering method was prepared.

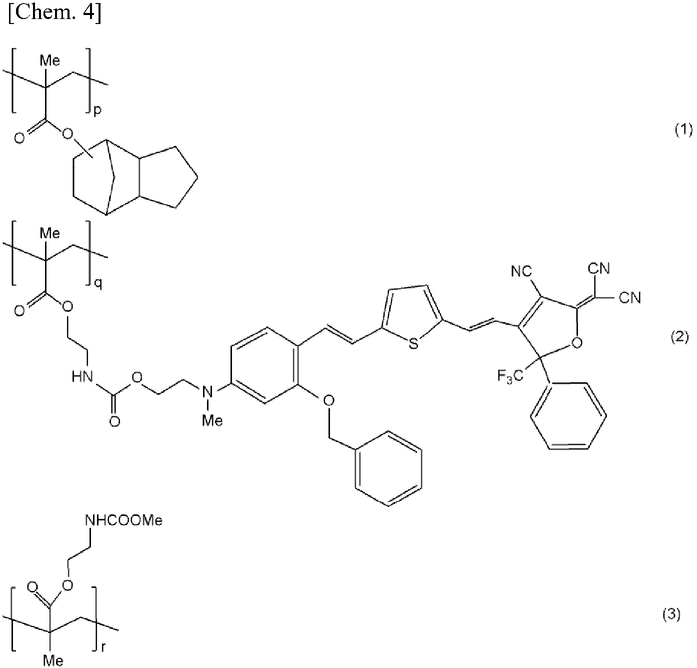

Then, while heating the first laminate to a temperature of 148°C, a poling process was performed on the first laminate by applying a voltage calculated from the voltage per unit thickness of the electro-optic polymer layer specified in the column "Voltage per unit thickness of electro-optic polymer layer in poling process in second step, [V/µm]" in Table 1 and the thickness of the electro-optic polymer layer specified in the column "Thickness of electro-optic polymer layer in first laminate, [µm]" in Table 1, between the first electrode and the second electrode, and while maintaining the voltage, cooling was performed to room temperature (second step). For the first laminate obtained in the second step, the electro-optic coefficient (r₃₃) of the electro-optic polymer layer at a wavelength of 1308 nm and a wavelength of 1550 nm measured by a transmission ellipsometric method (T. Yamada, A. Otomo, "Transmission ellipsometric method without an aperture for simple and reliable evaluation of electro-optic properties", Opt. Express, vol. 21, 29240-29248 (2013)) is shown in each of the columns "Electro-optic coefficient (r₃₃) at wavelength 1308 nm after second step" and "Electro-optic coefficient (r₃₃) at wavelength 1550 nm after second step" in Table 1. Note that the "Electro-optic coefficient (r₃₃) at wavelength 1308 nm after second step" of Sample 1 differs from the "Electro-optic coefficient (r₃₃) at wavelength 1308 nm after second step" of Sample 4, due to the variations in the numerical values. Also, the "Electro-optic coefficient (r₃₃) at wavelength 1550 nm after second step" of Sample 1 differs from the "Electro-optic coefficient (r₃₃) at wavelength 1550 nm after second step" of Sample 4, due to the variations in the numerical values. Then, the second electrode was removed from the first laminate by wet etching to prepare a second laminate (third step).

Then, one surface of the target substrate specified in Table 1 (a surface on the SiO₂ side for Sample 1, a surface on the synthetic quartz side for Sample 2, a surface on the ITO side for Sample 3, and a surface on the cycloolefin polymer (ZEONOR (Zeon Corporation, registered trademark)) side for Sample 4) was subjected to oxygen plasma treatment with a reactive ion etching apparatus, and then treated with a silane coupling agent having an amino group (manufactured by Shin-Etsu Chemical Co., Ltd., KBP-90). Also, the surface of the second laminate that was in contact with the second electrode was subjected to oxygen plasma treatment with a reactive ion etching apparatus. After that, the second laminate and the target substrate were bonded to each other under pressure at a temperature of 100°C such that the surface of the target substrate treated by the oxygen plasma treatment and the silane coupling agent treatment came into contact with a surface of the second laminate on the electro-optic polymer layer side, for lamination of the target substrate on the second laminate to prepare a third laminate (fourth step). Then, laser peeling of the support substrate from the third laminate was performed with the use of a "Laser Saw (DFL7560L)" (trademark), a laser processing apparatus manufactured by DISCO Corporation, to remove the support substrate to prepare a fourth laminate (fifth step). Here, laser irradiation for performing the laser peeling was performed at a surface of the third laminate on the support substrate side. Then, the light absorption layer was removed from the fourth laminate by dry etching with a reactive ion etching apparatus, and then the first electrode was removed by wet etching, to prepare a nonlinear optical laminate (sixth step). Note that target substrates A to D respectively refer to target substrates having the following configurations. For example, "2 µm SiO₂/400 µm Si substrate" means that "2 µm SiO₂" and "400 µm Si substrate" are laminated in this order.

### (Target Substrates A to D)

Target Substrate A: 2 µm SiO₂/400 µm Si substrate (Substrate size, 25 mm×25 mm)
Target Substrate B: Synthetic quartz glass substrate (Substrate size, 25 mm×25 mm×1 mm)
Target Substrate C: ITO glass substrate (Substrate size, 25 mm×25 mm×0.7 mm; thickness of ITO layer, 9 nm)
Target Substrate D: 23 µm cycloolefin polymer (ZEONOR (Zeon Corporation, registered trademark))/800 nm SiO₂/5 nm Ti/200 nm Au/10 nm Ti/2 µm SiO₂/400 µm Si substrate (Substrate size, 25 mm×25 mm)

### <Preparation of Nonlinear Optical Laminate according to Sample 101>

For preparation of Sample 101, a solution (15 mass%) of an electro-optic polymer having a glass transition temperature of 178°C was spin-coated at a number of rotations of 3000 rpm on an ITO glass substrate (substrate size, 40 mm×30 mm×0.7 mm; thickness of ITO layer, 9 nm) serving as a support substrate, and the resultant was subjected to heat treatment at 180°C to form an electro-optic polymer layer. After that, on the electro-optic polymer layer, an IZO film with a thickness of 100 nm was formed by an RF sputtering method, to prepare a first' laminate. The thickness of the electro-optic polymer layer in the first' laminate was 1.3 µm. Between an ITO electrode under the electro-optic polymer layer and an IZO electrode over the electro-optic polymer layer, a voltage (156 V) calculated from the voltage per unit thickness of the electro-optic polymer layer (120 V/µm) and the thickness of the electro-optic polymer layer (1.3 µm) was applied for performing a poling process, and while maintaining the voltage, cooling was performed to room temperature. The electro-optic coefficient (r₃₃) of the electro-optic polymer layer measured by the above-mentioned transmission ellipsometric method was 45.0 pm/V at a wavelength of 1308 nm and 32.4 pm/V at a wavelength of 1550 nm. Then, the upper IZO electrode was removed from the first' laminate by wet etching to prepare a second' laminate. Then, a surface of a target substrate composed of "2.3 µm ultraviolet curable resin (FE4048, manufactured by NTT-AT)", "100 nm IZO", "2 µm SiO₂", and "500 µm Si substrate" laminated in this order, on the ultraviolet curable resin (FE4048, manufactured by NTT-AT) side, was subjected to oxygen plasma treatment with a reactive ion etching apparatus, and then treated with a silane coupling agent having an amino group (manufactured by Shin-Etsu Chemical Co., Ltd., KBP-90). Also, a surface of the second' laminate on the electro-optic polymer layer side was subjected to oxygen plasma treatment with a reactive ion etching apparatus. After that, the second' laminate and the target substrate were bonded to each other under pressure at a temperature of 100°C such that the surface of the target substrate treated by the oxygen plasma treatment and the silane coupling agent treatment came into contact with the surface of the second' laminate on the electro-optic polymer layer side, for lamination of the target substrate on the second' laminate to prepare a third' laminate. Then, the support substrate (ITO glass substrate) was removed from the third' laminate by mechanical tensile peeling of the support substrate to prepare a nonlinear optical laminate according to Sample 101.

### <Preparation of Nonlinear Optical Laminate according to Sample 102>

For preparation of Sample 102, on the same substrate as the target substrate (synthetic quartz glass substrate) of Sample 2, by using the same electro-optic polymer as the electro-optic polymer used for the preparation of Sample 2, an electro-optic polymer layer was formed by a spin coating method, and the resultant was subjected to heat treatment at 170°C to prepare a nonlinear optical laminate intermediate. Note that the electro-optic polymer layer of Sample 102 was formed by using an electro-optic polymer solution having the same concentration as that for Sample 2, at the same number of rotations of spin coating as that for Sample 2. After that, the same oxygen plasma treatment as the oxygen plasma treatment performed in the fourth step on the surface of Sample 2 on the electro-optic polymer layer side was performed on a surface of the nonlinear optical laminate intermediate on the electro-optic polymer layer side, to prepare a nonlinear optical laminate according to Sample 102. The thickness of the electro-optic polymer layer in the nonlinear optical laminate according to Sample 102 was 130 nm.

As described above, the nonlinear optical laminates according to Sample 1 to Sample 4, Sample 101, and Sample 102 were prepared.

**[Table 1]**

| Sample No. | Sample 1 | Sample 2 | Sample 3 | Sample 4 |
|---|---|---|---|---|
| Type of target substrate | Target substrate A | Target substrate B | Target substrate C | Target substrate D |
| Thickness of electro-optic polymer layer in first laminate, [µm] | 1.84 | 0.11 | 1.87 | 1.84 |
| Number of rotations of spin coating performed for forming electro-optic polymer layer in first step, [rpm] | 1900 | 4000 | 1900 | 1900 |
| Concentration of electro-optic polymer solution used for spin coating, [mass%] | 18 | 5 | 18 | 18 |
| First step | Performed | Performed | Performed | Performed |
| Second step | Performed | Performed | Performed | Performed |
| Voltage per unit thickness of electro-optic polymer layer in poling process in second step, [V/µm] | 100 | 0.01 | 100 | 100 |
| Electro-optic coefficient (r33) at wavelength 1308 nm after second step, [pm/V] | 41.4 | Below detection limit | 34.5 | 39.9 |
| Electro-optic coefficient (r33) at wavelength 1550 nm after second step, [pm/V] | 29.5 | Below detection limit | 27.7 | 30.6 |
| Third step | Performed | Performed | Performed | Performed |
| Fourth step | Performed | Performed | Performed | Performed |
| Fifth step | Performed | Performed | Performed | Performed |
| Sixth step | Performed | Performed | Performed | Performed |
| Electro-optic coefficient (r33) at wavelength 1308 nm after sixth step, [pm/V] | - | - | 33.1 | - |
| Electro-optic coefficient (r33) at wavelength 1550 nm after sixth step, [pm/V] | - | - | 27.0 | - |

### <<Evaluation of Properties of Nonlinear Optical Laminate>>

### <Homogeneity>

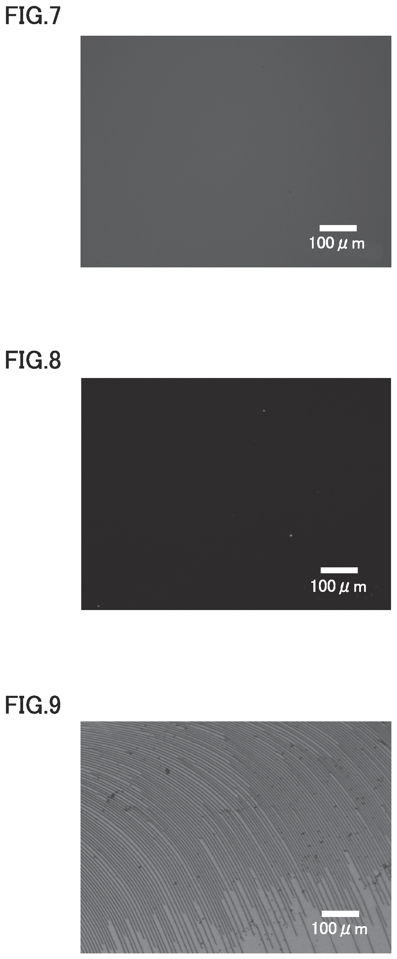

In order to evaluate homogeneity of the electro-optic polymer layer in the nonlinear optical laminate, the nonlinear optical laminate according to Sample 1 was examined under a microscope. An example of a bright-field microscope image of the nonlinear optical laminate according to Sample 1 is shown in Fig. 7, and an example of a dark-field microscope image is shown in Fig. 8. In the dark-field microscope image, defect structures such as cracks can be seen more clearly. In both the bright-field microscope image and the dark-field microscope image of the nonlinear optical laminate according to Sample 1, defect structures such as cracks were not observed, and it was confirmed that a nonlinear optical laminate having excellent homogeneity was manufactured. Note that white spots seen in the dark-field microscope image of the nonlinear optical laminate according to Sample 1 are due to deposits, not due to defect structures. Also, as a comparative example, an example of a bright-field microscope image of the nonlinear optical laminate according to Sample 101 is shown in Fig. 9. In the bright-field microscope image of the nonlinear optical laminate according to Sample 101 prepared by mechanical tensile peeling, defect structures such as cracks were observed. Note that having excellent homogeneity means that the nonlinear optical laminate tends not to have defect structures such as cracks, and from this viewpoint, it means that a nonlinear optical laminate can be manufactured with a good yield.

### <Non-damage Property>

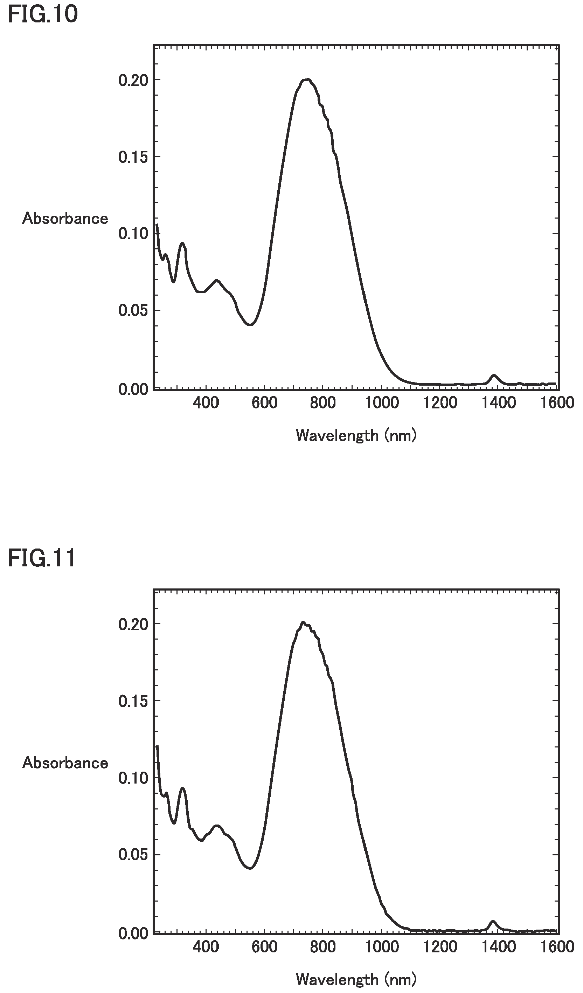

In order to evaluate a non-damage property of an electro-optic polymer included in the electro-optic polymer layer in the nonlinear optical laminate, an absorption spectrum of the nonlinear optical laminates according to Sample 2 and Sample 102 was measured. For the measurement of the absorption spectrum, a synthetic quartz glass substrate having a very small absorption coefficient at each wavelength was used as a target substrate for Sample 2 and Sample 102. For the measurement of the absorption spectrum, an ultraviolet-visible-near infrared spectrophotometer (UH4150, manufactured by Hitachi High-Tech Corporation) was used. Fig. 10 shows an absorption spectrum of the nonlinear optical laminate according to Sample 102 (reference example). Fig. 11 shows an absorption spectrum of the nonlinear optical laminate according to Sample 2. The shape of the absorption spectrum and the intensity of the spectrum of the nonlinear optical laminate according to Sample 2 are almost the same as those of the nonlinear optical laminate according to Sample 102 (reference example), with no damage occurred to the electro-optic polymer (including electro-optic molecules) of the nonlinear optical laminate according to Sample 2, and it was confirmed that a nonlinear optical laminate having an excellent non-damage property was manufactured. This indicates that the electro-optic polymer (including electro-optic molecules) included in the electro-optic polymer layer is not damaged even by the fifth step including laser irradiation and other steps (first step, second step, third step, fourth step, and sixth step). Note that, for Sample 2, in order to remove an influence of a change in spectral intensity caused by orientation of electro-optic molecules due to poling of the electro-optic polymer layer, a very small "voltage per unit thickness of electro-optic polymer layer" (0.01 V/µm) was applied in the poling process (second step) as shown in Table 1. Note that having an excellent non-damage property means that a decrease in nonlinear optical properties of the nonlinear optical laminate due to damage to the electro-optic polymer (including electro-optic molecules) tends not to occur, and from this viewpoint, it means that a nonlinear optical laminate having excellent nonlinear optical properties can be manufactured with a good yield.

### <Nonlinear Optical Properties>

In order to evaluate nonlinear optical properties (electro-optic properties) of the electro-optic polymer layer in the nonlinear optical laminate, the electro-optic coefficient of the nonlinear optical laminate according to Sample 3 was evaluated. For the measurement of the electro-optic coefficient, for Sample 3, a glass substrate (ITO glass substrate) having a transparent electrode was used as a target substrate. On a surface of the nonlinear optical laminate according to Sample 3 on the electro-optic polymer layer side, an IZO film with a thickness of 100 nm was formed by an RF sputtering method. The electro-optic coefficients (r₃₃) of the electro-optic polymer layer at a wavelength of 1308 nm and a wavelength of 1550 nm measured by the above-mentioned transmission ellipsometric method are shown in the column "Electro-optic coefficient (r₃₃) at wavelength 1308 nm after sixth step, [pm/V]" and the column "Electro-optic coefficient (r₃₃) at wavelength 1550 nm after sixth step, [pm/V]" in Table 1, respectively. Regarding Sample 3, as shown in Table 1, there is almost no difference in electro-optic coefficient between after the second step and after the sixth step, with no decrease in nonlinear optical properties (electro-optic properties) of the nonlinear optical laminate according to Sample 3, and it was confirmed that a nonlinear optical laminate having excellent nonlinear optical properties (electro-optic properties) was manufactured. This indicates that the electro-optic polymer (including electro-optic molecules) included in the electro-optic polymer layer is not damaged even by the fifth step including laser irradiation and other steps (third step, fourth step, and sixth step), and orientation relaxation of the electro-optic molecules due to a rise in temperature does not occur. Note that having excellent nonlinear optical properties (electro-optic properties) means that a decrease in nonlinear optical properties of the nonlinear optical laminate due to damage to the electro-optic polymer (including electro-optic molecules) and due to orientation relaxation of the electro-optic molecules tends not to occur, and from this viewpoint, it means that a nonlinear optical laminate having excellent nonlinear optical properties (electro-optic properties) can be manufactured with a good yield.

### <Preparation of Optical Waveguide Device>

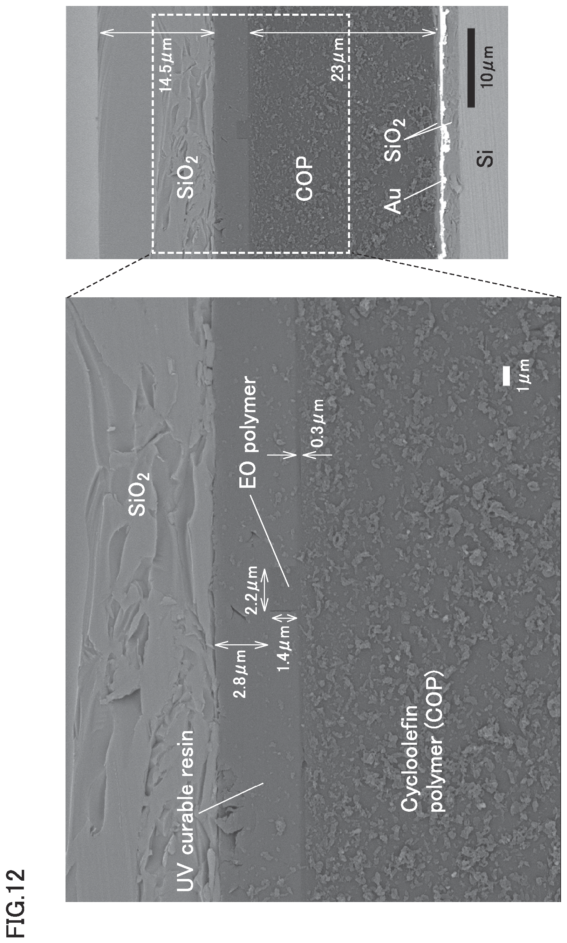

With the use of the nonlinear optical laminate according to Sample 4, an optical waveguide device was prepared. Photolithography was performed on a surface of the nonlinear optical laminate according to Sample 4 on the electro-optic polymer layer side to form a mask on the electro-optic polymer layer, and the electro-optic polymer layer was processed by a dry etching method with a reactive ion etching apparatus to prepare a ridge-type electro-optic polymer optical waveguide structure. Onto the waveguide-processed electro-optic polymer layer, an ultraviolet curable resin (FE4048, manufactured by NTT-AT) was applied as an upper cladding layer of the optical waveguide by a spin coating method, and after irradiation with 365 nm LED light, heat treatment was performed at 80°C. On the upper cladding layer, a SiO₂ layer was formed at 80°C by a CVD method (chemical vapor deposition method) to prepare an "optical waveguide device according to Sample 4". A cross-sectional electron microscope image (reflection electron microscope image) of the optical waveguide device according to Sample 4 obtained by dicing using a diamond blade is shown in Fig. 12. In Fig. 12, on a cycloolefin polymer (ZEONOR (Zeon Corporation, registered trademark)) which was the outermost layer of the target substrate, the presence of a ridge-type electro-optic polymer optical waveguide structure can be confirmed. Then, the propagation loss of the electro-optic polymer optical waveguide in the optical waveguide device according to Sample 4 was evaluated. Into one waveguide end face of the optical waveguide device according to Sample 4 that was diced to have an optical waveguide length of 7 mm, a continuous-wave laser beam of 7.3 mW and 1535 nm wavelength was introduced with the use of a tapered lensed fiber having an irradiation spot diameter (1/e²) of 2 µm, and from the opposite waveguide end face, light was extracted with the use of a tapered lensed fiber having an irradiation spot diameter (1/e²) of 2 µm; at this time, the power of output light was 1.6 mW. The coupling loss in optical coupling with the optical waveguide with the use of the tapered lensed fibers estimated by a cut-back method was 4 dB (2 dB on one side), and an estimated propagation loss of the optical waveguide was 3.7 dB/cm. This value is close to the value of an optical loss (approximately 3 dB/cm) at a wavelength of 1550 nm of the electro-optic polymer material used here, and it was confirmed that the electro-optic polymer optical waveguide thus prepared had a low loss and a nonlinear optical laminate having excellent homogeneity without defect structures such as cracks was manufactured. Note that, as described above, having excellent homogeneity means that the nonlinear optical laminate tends not to have defect structures such as cracks, and from this viewpoint, it means that a nonlinear optical laminate can be manufactured with a good yield.

The methods of manufacturing the nonlinear optical laminates according to Samples 1 to 4 correspond to Examples. The method of manufacturing the nonlinear optical laminate according to Sample 101 corresponds to a Comparative Example. It was found that by the methods of manufacturing the nonlinear optical laminates according to Samples 1 to 4, it is possible to manufacture a nonlinear optical laminate with a better yield than by the method of manufacturing the nonlinear optical laminate according to Sample 101.

As described above, it was confirmed that by the methods of manufacturing the nonlinear optical laminates according to Samples 1 to 4, it is possible to manufacture a nonlinear optical laminate with a good yield.

Although the embodiment and examples of the present invention are described above, it is originally planned that certain configurations of the embodiment and examples can be combined as appropriate.

The embodiment and examples disclosed herein are illustrative and non-restrictive in any respect. The scope of the present invention is defined by the terms of the claims, not by the embodiment and examples, and intended to encompass all modifications and variations equivalent in meaning and scope to the claims.

### REFERENCE SIGNS LIST

1 support substrate, 2 light absorption layer, 3 first electrode, 4 electro-optic polymer layer, 5 second electrode, 6 target substrate, 7a first charge blocking layer, 7b second charge blocking layer, 8 sealing film layer, 11 first laminate, 12 second laminate, 13 third laminate, 14 fourth laminate, 20 nonlinear optical laminate.

## Claims

1. A method of manufacturing a nonlinear optical laminate comprising a target substrate and an electro-optic polymer layer positioned on the target substrate, the method comprising, in this order:
a first step of preparing a first laminate that is made of a support substrate, a light absorption layer, a first electrode, an electro-optic polymer layer, and a second electrode laminated in this order;
a second step of performing a poling process on the electro-optic polymer layer of the first laminate;
a third step of removing the second electrode from the first laminate to obtain a second laminate;
a fourth step of laminating the target substrate on a surface of the second laminate that was in contact with the second electrode to obtain a third laminate;
a fifth step of performing laser peeling of the support substrate from the third laminate to remove the support substrate to obtain a fourth laminate; and
a sixth step of removing the light absorption layer and the first electrode from the fourth laminate to obtain a nonlinear optical laminate.

2. The method of manufacturing a nonlinear optical laminate according to claim 1, wherein the light absorption layer is made of a first resin.

3. The method of manufacturing a nonlinear optical laminate according to claim 2, wherein a glass transition temperature of the first resin is higher than a glass transition temperature of the electro-optic polymer layer.

4. The method of manufacturing a nonlinear optical laminate according to claim 2 or 3, wherein a heat deflection temperature of the first resin is higher than the glass transition temperature of the electro-optic polymer layer.

5. The method of manufacturing a nonlinear optical laminate according to claim 2 or 3, wherein the first resin is polyimide.

6. The method of manufacturing a nonlinear optical laminate according to any one of claims 1 to 3, wherein a first charge blocking layer is further laminated between the first electrode and the electro-optic polymer layer in the first laminate.

7. The method of manufacturing a nonlinear optical laminate according to claim 6, wherein in the sixth step, the first charge blocking layer is also removed from the fourth laminate.

8. The method of manufacturing a nonlinear optical laminate according to any one of claims 1 to 3, wherein a second charge blocking layer is further laminated between the electro-optic polymer layer and the second electrode in the first laminate.

9. The method of manufacturing a nonlinear optical laminate according to claim 8, wherein in the third step, the second charge blocking layer is also removed from the first laminate.

10. The method of manufacturing a nonlinear optical laminate according to any one of claims 1 to 3, wherein
in the fourth step, a sealing film layer is further laminated between the second laminate and the target substrate, and
the nonlinear optical laminate further comprises the sealing film layer positioned between the target substrate and the electro-optic polymer layer.
